# EUROPÄISCHE PATENTSCHRIFT

(11) **EP 2 274 151 B1**
(45) Veröffentlichungstag und Bekanntmachung des Hinweises auf die Patenterteilung: **08.04.2015**
(21) Anmeldenummer: 09735328.8
(22) Anmeldetag: 23.04.2009
(51) Int. Cl.: B29C 53/12, B29C 43/22

(54) **VORRICHTUNG ZUM HERSTELLEN VON WENDELN AUS DRÄHTEN**
DEVICE FOR PRODUCING WIRE COILS
SYSTÈME POUR PRODUIRE DES SPIRES À PARTIR DE FILAMENTS

(30) Priorität: 26.04.2008 DE 202008005836 U
(43) Veröffentlichungstag der Anmeldung: 19.01.2011
(73) Patentinhaber: Karl Mayer Textilmaschinenfabrik GmbH, 63179 Obertshausen (DE)
(72) Erfinder: BACHMANN, Wolfgang, 64853 Otzberg (DE); JULIEN, Marcel, 63322 Rödermark (DE); JULIEN, Pascal, 63110 Rodgau (DE)
(74) Vertreter: Knoblauch, Andreas
(86) Internationale Anmeldenummer: PCT/EP2009/002990
(87) Internationale Veröffentlichungsnummer: WO 2009/130036

(56) Entgegenhaltungen:
- EP-A- 0 017 722
- DE-A1- 2 147 438
- US-A- 4 302 491

## Beschreibung

Die Erfindung betrifft eine Vorrichtung zum Herstellen von Wendeln aus Drähten aus Kunststoffen, mit einer Wickeleinrichtung, die eine um ihre Achse rotierbare Führung für die Drähte aufweist, und mit einem Formkörper, auf dem die Wendel mittels der Wickeleinrichtung ablegbar und von dem sie abziehbar ist.

### Der Stand der Technik:

Durch die EP 0 017 722 A1 ist eine Vorrichtung zum Herstellen von Wendeln aus Kunststoffdrähten mit Kreisquerschnitt bekannt, die im Zuge weiterer Arbeitsgänge zu Siebbändern für die Papierherstellung vereinigt werden. Dabei wird der Kunststoffdraht einem rotierenden zylindrischen Dorn, der in seiner Achsrichtung oszilliert, von der Seite her, also in tangentialer Richtung zur Zylinderfläche, zugeführt, thermofixiert und von dem Dorn wieder abgezogen. Da die zylindrische Wendel hierbei um ihre eigene Achse mit der Wickeldrehzahl rotiert, muss sie - in begrenzten Längenabschnitten - in Behältern aufgefangen und für die Weiterverarbeitung zwischengelagert werden, die mit der gleichen hohen Drehzahl rotieren wie der Dorn. Die Verarbeitung von Kunststoffdrähten mit vom Kreisquerschnitt abweichen Querschnitten ist nicht angesprochen.

An die Qualität und die Geometrie der Siebbänder werden hohe Anforderungen gestellt. Ihre Hüllflächen sollen möglichst eben und die Abstände zwischen den Windungen sollen möglichst klein sein. Nun bilden sich beim Wickeln kreisförmiger Drähte und bei einer nachfolgenden Verdichtung der Siebbänder im Bereich starker Biegungen wulstförmige Verdickungen aus, die den Anforderungen entgegenstehen. Dieser Effekt nimmt deutlich ab, wenn flache Drähte um Achsen gebogen werden, die parallel zu den längsten Querschnittsabmessungen verlaufen.

Durch die DE 21 47 438 A ist es bekannt, Wendeln aus Drähten, vorzugsweise aus thermoplastischen Kunststoffen, dadurch herzustellen, dass man diese über zwei quer zueinander versetzte Rotoren mit exzentrischen Führungskanälen auf eine zylindrische und feststehende Wickelstange aufwickelt. Es ist jedoch weder offenbart, dass hierbei der Querschnitt des Drahtes verändert wird, noch, dass eine Verformungseinrichtung mit der Wickeleinrichtung rotiert. Nach der Aufgabenstellung geht es darum, den Bauaufwand zu verringern und Hilfseinrichtungen zu vermeiden.

Durch zwischenzeitlich auf den Markt gelangte Wendel-Maschinen ist es weiterhin bekannt, solche Wendeln auch aus vorgefertigten Kunststoff-Monofilen herzustellen, die einen vom Kreisquerschnitt abweichenden Querschnitt aufweisen können und beispielsweise Flach-Monofile sind. Dabei ist es aber erforderlich, bei Querschnittswechseln jedes Mal für den gerade zu verarbeitenden Monofil-Querschnitt, der auch wieder kreisförmig sein kann, die relativ grossen und schweren Vorratsspulen auszuwechseln, die Gewichte bis zu 10 kg und darüber haben können und deren Drehzahl und damit die Produktionsgeschwindigkeit begrenzt sind. Das führt zu entsprechenden eigenständigen Maschinen, die mit Maschinen zur Weiterverarbeitung gekoppelt werden müssen.

### Die Aufgabe:

Der Erfindung liegt demgegenüber die Aufgabe zugrunde, ein Wickelsystem für Wendeln anzugeben, das einfach ausgebildet ist und das die Umstellung auf unterschiedliche Ausgangsquerschnitte der Monofilamente innerhalb der Wendelmaschine ohne Wechsel der Vorratsspule und ohne Einschränkung der Produktionsgeschwindigkeit erlaubt und das sowohl bei der Erstausstattung als auch bei einer Nachrüstung bereits vorhandener Wendelmaschinen eingesetzt werden kann.

### Die Lösung der Aufgabe:

Die Lösung dieser Aufgabe erfolgte bei der eingangs beschriebenen Vorrichtung erfindungsgemäss dadurch, dass der Wickeleinrichtung eine mit ihr rotierbare Verformungseinrichtung für den Querschnitt des jeweiligen Drahtes zugeordnet ist.

### Die Vorteile:

Dadurch wird ein Wickelsystem für Wendeln geschaffen, das einfach ausgebildet ist und das die Umstellung auf unterschiedliche Ausgangsquerschnitte der Monofilamente innerhalb der Wendelmaschine ohne Wechsel der Vorratsspule und ohne Einschränkung der Produktionsgeschwindigkeit erlaubt und das sowohl bei der Erstausstattung als auch bei einer Nachrüstung bereits vorhandener Wendelmaschinen eingesetzt werden kann. Dadurch ist es ausserdem möglich, die Einstellung der Verformungseinrichtung bei laufenden Drähten umzustellen und/oder nachzujustieren und das Ergebnis sofort zu kontrollieren. Vor allem aber wird der Wulstbildung im Drahtquerschnitt an Stellen verstärkter Biegung, d.h. zwei Mal pro Windung (!) äusserst erfolgreich entgegengewirkt, so dass insbesondere auch die Qualität der Endprodukte, der sogenannten Siebbänder, wie sie für die Papierfabrikation benötigt werden, merklich verbessert wird. Es erfolgt auch keine Rotation der Wendeln aufgrund des stillstehenden bzw. nicht rotierenden Formkörpers.

### Weitere Ausgestaltungen der Erfindung:

Es ist im Zuge weiterer Ausgestaltungen der Erfindung besonders vorteilhaft, wenn - entweder einzeln oder in Kombination:
* die Verformungseinrichtung der Wickeleinrichtung vorgeschaltet ist,
* die Führung für die Drähte als achsparalleler Führungskanal in der Wickeleinrichtung ausgebildet ist und wenn die Verformungseinrichtung einen Ausgang aufweist, der der Wickeleinrichtung in der Weise vorgeschaltet ist, dass der Ausgang der Verformungseinrichtung auf die Führung in der Wickeleinrichtung ausgerichtet ist, und zwar ggf. auch mit Abstand,
* die Verformungseinrichtung drehfest mit der Wickeleinrichtung verbunden ist,
* die Verformungseinrichtung zwei Walzen besitzt, deren Achsen tangential zu virtuellen Zylinderflächen verlaufen, die die Rotationsachse der Verformungseinrichtung konzentrisch umgeben,
* der Abstand der Walzen und damit der Walzenspalt einstellbar ausgebildet ist,
* der Walzenspalt exzentrisch zur Rotationsachse der Verformungseinrichtung angeordnet ist,
* die verstellbare Walze in einem Lagerbock angeordnet ist, der über eine radiale Gewindespindel verstellbar ist, deren Betätigungsende einen Einstellknopf besitzt, der in der rotationssymmetrischen Umfangsfläche des Gehäuses der Verformungseinrichtung liegt,
* zwischen dem Einstellknopf und dem Gehäuse eine Skalierung für den Walzenspalt angeordnet ist,
* die Walzen als Kugellager ausgebildet sind,
* die Aussenflächen der Walzen profiliert sind,
* die Walzen durch die Zugkraft des Drahtes antreibbar sind,
* mindestens eine der Walzen mit einem Antrieb versehen ist
* die Wickeleinrichtung und die Verformungseinrichtung jeweils drehbar auf Zapfen gelagert sind, deren Drehachsen zur Blockierung einer Eigenrotation radial versetzt zueinander ausgerichtet sind und wenn
   a) der Zapfen der Wickeleinrichtung verdrehfest mit dem Kern und dem Formkörper für die Bildung der Wendel auf dem Formkörper verbunden ist, und wenn
   b) der Hohlkörper mit der Führung für den Draht auf diesem Zapfen drehbar gelagert ist,
* auf dem Hohlkörper konzentrisch ein Zahnrad angeordnet ist, das mittels eines Getriebemotors und eines weiteren Zahnrades antreibbar ist,
* der Hohlkörper mit dem Zahnrad in Wälzlagern gelagert ist,
* der Hohlkörper der Verformungseinrichtung über radial zueinander bewegliche Kupplungsmittel mit dem Hohlkörper der Wickeleinrichtung verbunden ist, die einen Umlauf der radial zueinander versetzt auf den Zapfen gelagerten Hohlkörper gewährleisten, und/oder, wenn
* der Hohlkörper der Verformungseinrichtung zusammen mit dieser in Wälzlagern gelagert ist.

Ein Ausführungsbeispiel des Erfindungsgegenstandes und dessen Wirkungsweisen und weitere Vorteile werden nachfolgend anhand der Figuren 1 bis 5 näher erläutert.

Es zeigen:
- Figur 1: eine Seitenansicht des Laufweges eines Drahtes von seiner Vorratstrommel über eine Wickeleinrichtung mit einer Verformungseinrichtung und über einen Formkörper bis hin zu einer Fügeeinrichtung und einer Arbeitsfläche,
- Figur 2: eine axiale Draufsicht auf die transparent dargestellte Verformungseinrichtung in Richtung des Pfeils in Figur 1
- Figur 3: einen Schnitt durch die Figur 2 in einer axialen und radialen Ebene E-E in Figur 2,
- Figur 4: einen stark vergrösserten Ausschnitt aus Figur 2 und
- Figur 5: Axialschnitte durch eine Wickeleinrichtung und eine vorgeschaltete Verformungseinrichtung.

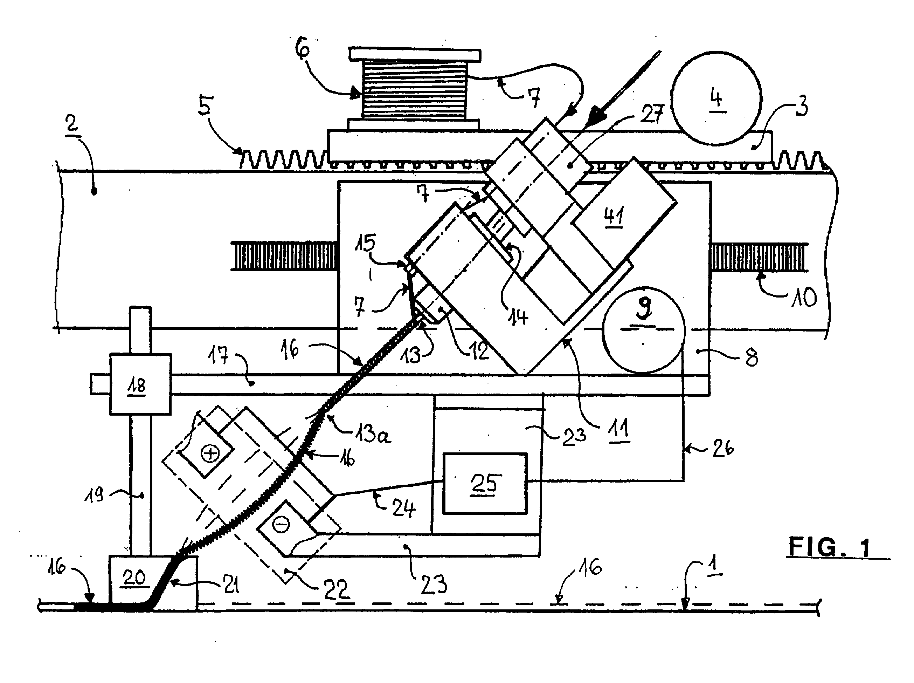

In Figur 1 ist eine Arbeitsfläche 1 dargestellt, die als Oberseite eines Maschinentisches ausgebildet sein kann und als Ablagefläche dient. Darüber befindet sich mit Abstand ein portalähnlicher Führungsrahmen 2, von dem nur die obere Traverse dargestellt ist, an der die funktionswesentlichen und beweglichen Komponenten gelagert bzw. geführt sind. Auf dem Führungsrahmen 2 befindet sich ein Fahrgestell 3 mit einem Getriebemotor 4, dessen hier nicht sichtbares Ritzel in eine Zahnstange 5 eingreift. Auf dem Fahrgestell 3 befindet sich eine Vorratstrommel 6 mit dem zu verarbeitenden Draht 7, der aus einem thermoplastischen Kunststoff, beispielsweise aus der Gruppe Polyester, Ryton, PEEK, Polyamid, PPS etc. besteht und dessen Durchmesser zwischen 0,2 und 0,6 mm betragen kann.

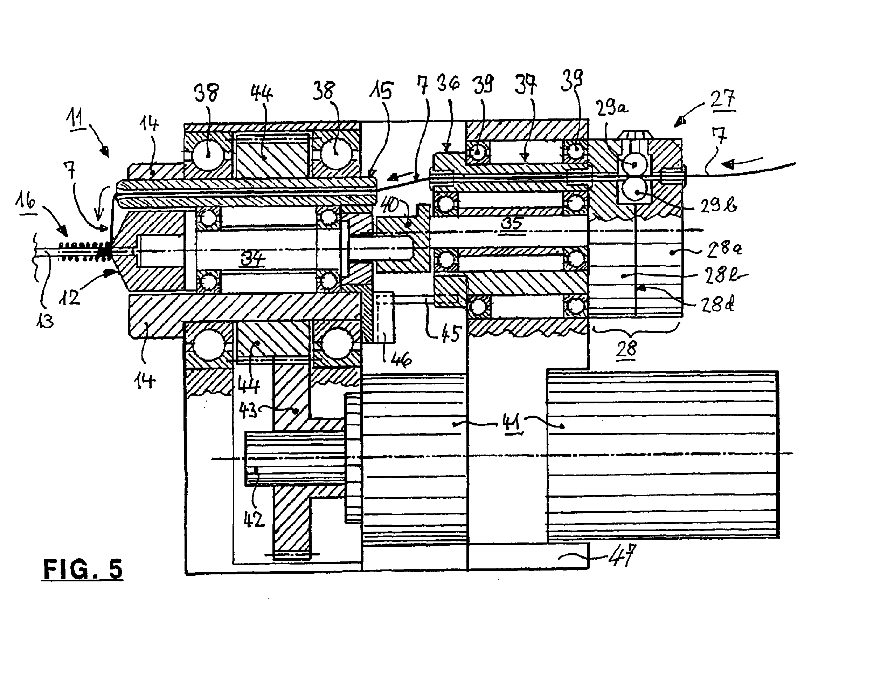

Vor dem Führungsrahmen 2 befindet sich ein weiteres Fahrgestell 8 mit einem Antriebsmotor 9, der über ein hier nicht sichbares Getriebe mit einem Ritzel in eine Zahnstange 10 eingreift. An dem Fahrgestell 8 hängtzum Betrachter hin - eine Wickeleinrichtung 11 mit einem stationären, d.h. nicht rotierenden, Kern 12, von dem ein eingespannter Formkörper 13 mit einem freien Ende 13a absteht, der die Form eines Schwertes hat und in Richtung auf das Einspannende zusätzlich schwach trapezförmig verbreitert ist. Auf diese trapezförmige Verbreiterung wird der Draht 7 aufgewickelt, und zwar durch die Rotation eines Hohlkörpers 14 mit einer exzentrischen Führung 15 für den Draht 7, die als achsparallele Röhre ausgebildet ist. Dadurch entsteht eine flache Wendel 16, die durch den Wickelvorgang vom Ende 13a des Formkörpers 13 abgeschoben wird. Weitere Einzelheiten werden anhand von Figur 5 noch näher erläutert.

An dem Fahrgestell 8 ist über einen Ausleger 17 ein Kreuzstück 18 aufgehängt, von dem nach unten ein Haltezapfen 19 ausgeht, an dessen unterem Ende eine Fügeeinrichtung 20 befestigt ist. Diese Fügeeinrichtung 20 besitzt einen etwa S-förmigen Spalt 21, der zum Betrachter hin offen ist und dessen Querschnitt dem Aussenumfang der Wendel 16 entspricht. Damit wird die Wendel 16 nicht nur auf der Arbeitsfläche 1 abgelegt, sondern es werden auch bereits abgelegte Wendeln 16 parallel zu sich selbst und senkrecht zur Zeichenebene so weit verschoben, dass jeweils zwei benachbarte Wendeln 16 eine solche überlappung erhalten, dass in den überlappungsbereich jeweils ein hier nicht gezeigter Steckdraht eingeschoben werden kann, durch die nach und nach eine Vielzahl von Wendeln 16 zu einem Wendelsieb vereinigt werden, das schrittweise senkrecht zur Zeichenebene verschoben wird, ein Vorgang, der an sich bekannt ist.

Zwischen dem Ende 13a des Formkörpers 13 und der Fügeeinrichtung 20 befindet sich eine Sensoranordnung 22, die an einem weiteren Ausleger 23 des Fahrgestells 8 befestigt ist und mit der ein Mass des Durchhängens der Wendel 16 konstant auf ein vorgegebenes Mass eingeregelt werden kann. Dies geschieht über eine Sensorleitung 24, einen Regler 25 und eine Stromleitung 26, mittels der die Drehzahl des Antriebsmotors 9 und damit die Fahrgeschwindigkeit des Fahrgestells 8 geregelt werden kann. Die Fahrgeschwindigkeiten der Fahrgestelle 3 und 8 lassen sich aufeinander abstimmen.

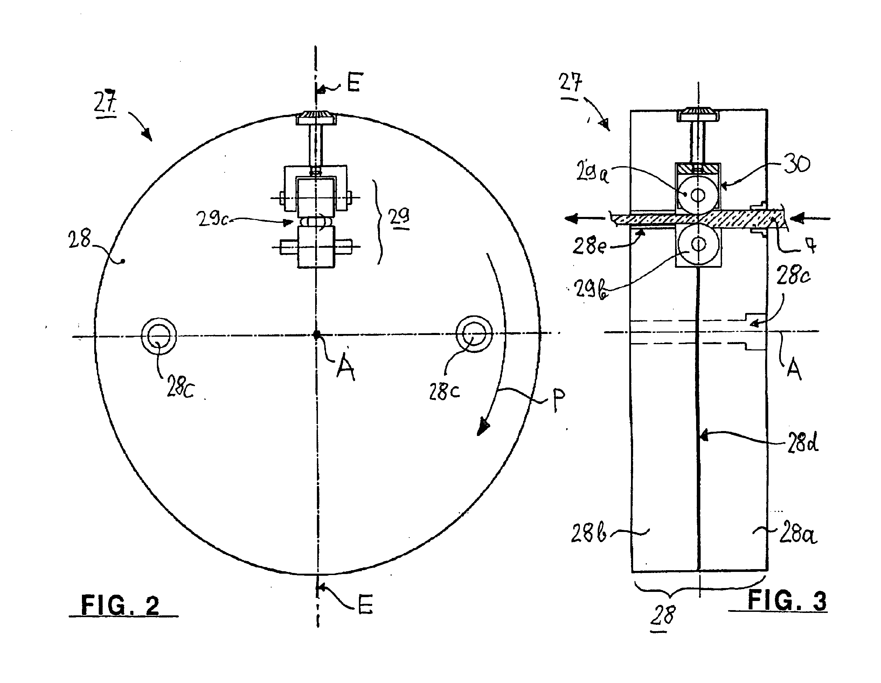

An dieser Stelle setzt nun der Kern der Erfindung ein: Der Wickeleinrichtung 11 ist eine Verformungseinrichtung 27 mit einem zylindrischen Gehäuse 28 (siehe Figur 5) vorgeschaltet, das mit der Führung 15 rotiert, und in dem ein Walzenpaar 29 gelagert ist. Weitere Einzelheiten werden anhand der Figuren 2 bis 5 näher erläutert.

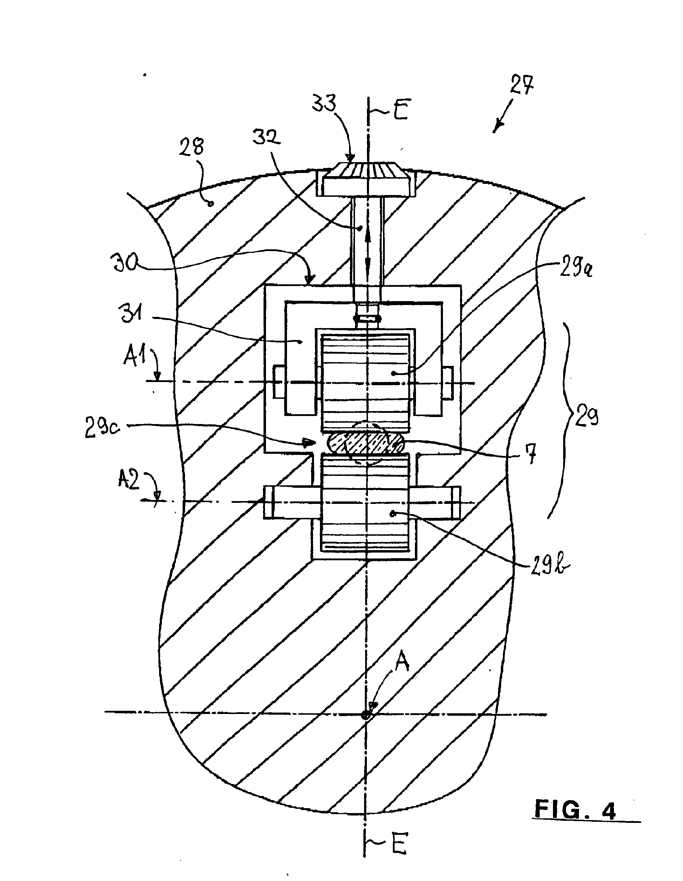

In den Figuren 2 bis 5 ist unter Beibehaltung der bisherigen Bezugszeichen folgendes dargestellt: Das Gehäuse 28 besitzt zwei kongruente Scheiben 28a und 28b mit äusseren Zylinderflächen, Schraublöchern 28c und einer radialen Trennfuge 28d. Die Scheiben 28a und 28b schliessen eine Kammer 30 zwischen sich ein, in dem das Walzenpaar 29, bestehend aus den Walzen 29a und 29b, untergebracht ist. Dazwischen besteht ein verstellbarer Walzenspalt 29c, der exzentrisch zur Achse A angeordnet ist. Der Draht 7 wird achsparallel durch das Gehäuse 28, den Walzenspalt 29c und einen Ausgang 28e hindurch geführt. Die Rotation um die Achse A ist in Figur 2 durch einen Pfeil P angedeutet. Weitere Einzelheiten werden anhand der Figuren 4 und 5 näher erläutert.

Figur 4 zeigt, dass die äussere Walze 29a in einem U-förmigen Lagerbock 31 gelagert ist, der mittels einer Gewindespindel 32 und einem Einstellknopf 33 radial verstellbar ist, um den Walzenspalt 29c zu verändern. Der Einstellknopf 33 besitzt eine Skalierung, die mit einer Marke auf dem Umfang des Gehäuses 28 vergleichbar ist. Im Gegensatz dazu ist die radial innere Walze 29b - wie gezeigt - ortsfest im Gehäuse 28 gelagert. Die Walzen 29a und 29b besitzen Walzenachsen A1 und A2, die tangential zu virtuellen Zylinderflächen verlaufen, die die Achse A konzentrisch umgeben, wobei die Achsen A1 und A2 in der Draufsicht auch senkrecht zur Achse A verlaufen. Die Parallelität der Achsen A1 und A2 wird durch eine hier nicht gezeigte Führung des Lagerbocks 31 erreicht. Aus einer Zusammenschau der Figuren 3 und 4 ergibt sich, das der Draht 7 mit einem Kreisquerschnitt (in Figur 4 gestrichelt) in den Walzenspalt 29c eintritt und in diesem einen Flach-Querschnitt erhält, dessen Umfangslinie einer Stadion-Rennbahn entspricht.

Unter Beibehaltung und Fortschreibung der bisherigen Bezifferung geht aus Figur 5 folgende hervor: Es wurde bereits aufgezeigt, dass der schwertförmige Formkörper 13 nicht rotiert, so dass auf eine Zwischenlagerung der Wendel 16 in einer mit der gleichen Drehzahl rotierenden Trommel verzichtet und die Wendel 16, die eine Flachwendel ist, unmittelbar weiterverarbeitet werden kann. Die drehfeste Lagerung des Kerns 12 mit dem Formkörper 13 geschieht durch zwei in Reihe geschaltete Zapfen 34 und 35, deren Achsen in radialer Richtung zueinander versetzt sind. Der Zapfen 34 ist konzentrisch von dem bereits beschriebenen Hohlkörper 14 mit der exzentrischen rohrförmigen Führung 15 umgeben, während der Zapfen 35 konzentrisch von einem weiteren Hohlkörper 36 mit einer ebenfalls exzentrischen rohrförmigen Führung 37 umgeben ist.

Die Hohlkörper 14 und 36 können dadurch mit ihren Führungen 15 und 37 frei um den jeweils eigenen Zapfen 34 und 35 rotieren, und die formschlüssigen Lagerungen der Hohlkörper 14 und 36 sind ihrerseits durch äussere Wälzlager 38 und 39 vorgegeben. Der Achsversatz der Zapfen 34 und 35 ist durch einen Formkörper 40 definiert. Die Verformungseinrichtung 27 ist dabei drehfest mit dem Hohlkörper 36 verbunden. Dadurch ist es möglich, dass der Draht 7 unbehindert durch andere Befestigungsmittel um die Zapfen 34 und 35 rotieren kann.

Der Antrieb erfolgt durch einen Getriebemotor 41, dessen Abtriebswelle 42 durch zwei Zahnräder 43 und 44 auf den Hohlkörper 14 einwirkt und dadurch den Wickelvorgang bewirkt. Die Drehbewegung des Hohlkörpers 14 wird auf den Hohlköper 36 durch einen achsparallelen Kupplungszapfen 45 übertragen, der drehfest in dem Hohlköper 36 befestigt ist, aber in einer radialen Nut eines Gegenkörpers 46 an dem anderen Hohlkörper 14 bewegen kann. Dadurch oszilliert die mittlere Umfangsgeschwindigkeit des Hohlkörpers 36 mit der Verformungseinrichtung 27 und der Frequenz der Drehzahl, wobei es sich überraschend gezeigt hat, dass hierbei auf andere, z.B. elektromechanische Bremsmittel zur Straffung des Drahtes 7 verzichtet werden kann.

Es versteht sich, dass die Wickeleinrichtung 11 auch in einer anderen Raumlage auf dem Fahrgestell 8 montiert werden kann, als in Figur 1 gezeigt, z.B. so, dass eine Grundplatte 47 plan auf das Fahrgestell 8 aufgesetzt wird.

### Bezugszeichenliste:

- 1: Arbeitsfläche
- 2: Führungsrahmen
- 3: Fahrgestell
- 4: Getriebemotor
- 5: Zahnstange
- 6: Vorratstrommel
- 7: Draht
- 8: Fahrgestell
- 9: Antriebsmotor
- 10: Zahnstange
- 11: Wickeleinrichtung
- 12: Kern
- 13: Formkörper
- 13a: Ende
- 14: Hohlkörper
- 15: Führung
- 16: Wendel
- 17: Ausleger
- 18: Kreuzstück
- 19: Haltezapfen
- 20: Fügeeinrichtung
- 21: Spalt
- 22: Sensoranordnung
- 23: Ausleger
- 24: Sensorleitung
- 25: Regler
- 26: Stromleitung
- 27: Verformungseinrichtung
- 28: Gehäuse
- 28a: Scheibe
- 28b: Scheibe
- 28c: Schraublöcher
- 28d: Trennfuge
- 28e: Ausgang
- 29: Walzenpaar
- 29a: Walze
- 29b: Walze
- 29c: Walzenspalt
- 30: Kammer
- 31: Lagerbock
- 32: Gewindespindel
- 33: Einstellknopf
- 34: Zapfen
- 35: Zapfen
- 36: Hohlkörper
- 37: Führung
- 38: Wälzlager
- 39: Wälzlager
- 40: Formkörper
- 41: Getriebemotor
- 42: Abtriebswelle
- 43: Zahnrad
- 44: Zahnrad
- 45: Kupplungszapfen
- 46: Gegenkörpers
- 47: Grundplatte

- A: Achse
- A1: Walzenachse
- A2: Walzenachse
- P: Pfeil

## Patentansprüche

1. Vorrichtung zum Herstellen von Wendeln (16) aus Drähten (7) aus Kunststoffen, mit einer Wickeleinrichtung (11), die eine um ihre Achse (A) rotierbare Führung (15) für die Drähte (7) aufweist, und mit einem Formkörper (13), auf dem die Wendel (16) mittels der Wickeleinrichtung (11) ablegbar und von dem sie abziehbar ist, **dadurch gekennzeichnet, dass** der Wickeleinrichtung (11) eine mit ihr rotierbare Verformungseinrichtung (27) für den Querschnitt des jeweiligen Drahtes (7) zugeordnet ist.

2. Vorrichtung nach Anspruch 1, **dadurch gekennzeichnet, dass** die Verformungseinrichtung (27) der Wickeleinrichtung (11) vorgeschaltet ist.

3. Vorrichtung nach Anspruch 2, **dadurch gekennzeichnet, dass** die Führung (15) für die Drähte (7) als achsparalleler Führungskanal in der Wickeleinrichtung (11) ausgebildet ist und dass die Verformungseinrichtung (27) einen Ausgang (28e) aufweist, der der Wickeleinrichtung (11) in der Weise vorgeschaltet ist, dass der Ausgang (28e) der Verformungseinrichtung (27) auf die Führung (15) in der Wickeleinrichtung (11) ausgerichtet ist.

4. Vorrichtung nach Anspruch 3, **dadurch gekennzeichnet, dass** die Verformungseinrichtung (27) drehfest mit der Wickeleinrichtung (11) verbunden ist.

5. Vorrichtung nach Anspruch 1, **dadurch gekennzeichnet, dass** die Verformungseinrichtung (27) zwei Walzen (29a, 29b) besitzt, deren Achsen (A1, A2) tangential zu virtuellen Zylinderflächen verlaufen, die die Rotationsachse (A) der Verformungseinrichtung (27) konzentrisch umgeben.

6. Vorrichtung nach Anspruch 5, **dadurch gekennzeichnet, dass** der Abstand der Walzen (29a, 29b) und damit der Walzenspalt (29c) einstellbar ausgebildet ist.

7. Vorrichtung nach Anspruch 6, **dadurch gekennzeichnet, dass** der Walzenspalt (29c) exzentrisch zur Rotationsachse (A) der Verformungseinrichtung (27) angeordnet ist.

8. Vorrichtung nach Anspruch 6, **dadurch gekennzeichnet, dass** die verstellbare Walze (29a) in einem Lagerbock (31) angeordnet ist, der über eine radiale Gewindespindel (32) verstellbar ist, deren Betätigungsende einen Einstellknopf (33) besitzt, der in der rotationssymmetrischen Umfangsfläche des Gehäuses (28) der Verformungseinrichtung (27) liegt.

9. Vorrichtung nach Anspruch 8, **dadurch gekennzeichnet, dass** zwischen dem Einstellknopf (33) und dem Gehäuse (28) eine Skalierung für den Walzenspalt (29c) angeordnet ist.

10. Vorrichtung nach Anspruch 5, **dadurch gekennzeichnet, dass** die Walzen (29a, 29b) als Kugellager ausgebildet sind.

11. Vorrichtung nach Anspruch 5, **dadurch gekennzeichnet, dass** die Aussenflächen der Walzen (29a, 29b) profiliert sind.

12. Vorrichtung nach Anspruch 5, **dadurch gekennzeichnet, dass** die Walzen (29a, 29b) durch die Zugkraft des Drahtes (7) antreibbar sind.

13. Vorrichtung nach Anspruch 5, **dadurch gekennzeichnet, dass** mindestens eine der Walzen (29a, 29b) mit einem Antrieb versehen ist.

14. Vorrichtung nach Anspruch 1, **dadurch gekennzeichnet, dass** die Wickeleinrichtung (11) und die Verformungseinrichtung (27) jeweils drehbar auf Zapfen (34, 35) gelagert sind, deren Drehachsen zur Blockierung einer Eigenrotation radial versetzt zueinander ausgerichtet sind und dass
a) der Zapfen (34) der Wickeleinrichtung (11) verdrehfest mit dem Kern (12) und dem Formkörper (13) für die Bildung der Wendel (16) auf dem Formkörper (13) verbunden ist, und dass
b) der Hohlkörper (14) mit der Führung (15) für den Draht (7) auf diesem Zapfen (24) drehbar gelagert ist.

15. Vorrichtung nach Anspruch 14, **dadurch gekennzeichnet, dass** auf dem Hohlkörper (14) konzentrisch ein Zahnrad (44) angeordnet ist, das mittels eines Getriebemotors (41) und einer weiteren Zahnrades (43) antreibbar ist.

16. Vorrichtung nach Anspruch 15, **dadurch gekennzeichnet, dass** der Hohlkörper (14) mit dem Zahnrad (44) in Wälzlagern (38) gelagert ist.

17. Vorrichtung nach Anspruch 14, **dadurch gekennzeichnet, dass** der Hohlkörper (36) der Verformungseinrichtung (27) über radial zueinander bewegliche Kupplungsmittel (45/46) mit dem Hohlkörper (14) der Wickeleinrichtung (11) verbunden ist, die einen Umlauf der radial zueinander versetzt auf den Zapfen (34, 35) gelagerten Hohlkörper (14, 36) gewährleisten.

18. Vorrichtung nach Anspruch 17, **dadurch gekennzeichnet, dass** der Hohlkörper (36) der Verformungseinrichtung (27) zusammen mit dieser in Wälzlagern (29) gelagert ist.

## Claims

1. Device for producing coils (16) from plastics wires (7), comprising a winding apparatus (11) having a guide (15) for the wires (7) which can rotate about its axis (A), and a shaping member (13) on which the coil (16) can be laid by means of the winding apparatus (11) and from which said coil can be removed, **characterised in that** the winding apparatus (11) is associated with a deformation apparatus (27), which can rotate therewith, for the cross section of the respective wire (7).

2. Device according to claim 1, **characterised in that** the deformation apparatus (27) is upstream of the winding apparatus (11).

3. Device according to claim 2, **characterised in that** the guide (15) for the wires (7) is formed as an axially parallel guide duct in the winding apparatus (11), and **in that** the deformation apparatus (27) has an outlet (28e) which is upstream of the winding apparatus (11) in such a way that the outlet (28e) of the deformation apparatus (27) is aligned with the guide (15) in the winding apparatus (11).

4. Device according to claim 3, **characterised in that** the deformation apparatus (27) is connected to the winding apparatus (11) for conjoint rotation.

5. Device according to claim 1, **characterised in that** the deformation apparatus (27) has two rolls (29a, 29b), the axes (A1, A2) of which extend tangentially to virtual cylindrical surfaces which concentrically surround the axis of rotation (A) of the deformation apparatus (27).

6. Device according to claim 5, **characterised in that** the distance between the rolls (29a, 29b) and thus the roll nip (29c) is adjustable.

7. Device according to claim 6, **characterised in that** the roll nip (29c) is arranged eccentrically with respect to the axis of rotation (A) of the deformation apparatus (27).

8. Device according to claim 6, **characterised in that** the adjustable roll (29a) is arranged in a bearing block (31) which can be adjusted by means of a radial threaded spindle (32), the actuating end of which has an adjusting knob (33) located in the rotationally symmetrical circumferential surface of the housing (28) of the deformation apparatus (27).

9. Device according to claim 8, **characterised in that** a scale for the roll nip (29c) is arranged between the adjusting knob (33) and the housing (28).

10. Device according to claim 5, **characterised in that** the rolls (29a, 29b) are formed as ball bearings.

11. Device according to claim 5, **characterised in that** the outer surfaces of the rolls (29a, 29b) are profiled.

12. Device according to claim 5, **characterised in that** the rolls (29a, 29b) can be driven by the tensile force of the wire (7).

13. Device according to claim 5, **characterised in that** at least one of the rolls (29a, 29b) is provided with a drive.

14. Device according to claim 1, **characterised in that** the winding apparatus (11) and the deformation apparatus (27) are each rotatably mounted on journals (34, 35), the axes of rotation of which are aligned in a manner radially offset from one another in order to prevent spinning, and **in that**
a) the journal (34) of the winding apparatus (11) is connected for conjoint rotation to both the core (12) and the shaping member (13) for forming the coil (16) on the shaping member (13), and **in that**
b) the hollow member (14) having the guide (15) for the wire (7) is rotatably mounted on said journal (24).

15. Device according to claim 14, **characterised in that** a gear (44) is arranged concentrically on the hollow member (14) and can be driven by means of a geared motor (41) and an additional gear (43).

16. Device according to claim 15, **characterised in that** the hollow member (14) is mounted, together with the gear (44), in rolling bearings (38).

17. Device according to claim 14, **characterised in that** the hollow member (36) of the deformation apparatus (27) is connected to the hollow member (14) of the winding apparatus (11) by means of coupling means (45/46) which can move radially relative to one another and ensure that the hollow members (14, 36) rotate, which hollow members are mounted on the journals (34, 35) in a manner radially offset from one another.

18. Device according to claim 17, **characterised in that** the hollow member (36) of the deformation apparatus (27) is mounted, together with said apparatus, in rolling bearings (29).

## Revendications

1. Dispositif de fabrication de filaments spiralés (16) à partir de fils (7) en matières plastiques, comprenant un enrouleur (11), qui présente un guide (15) rotatif autour de son axe (A) pour les fils (7), un corps de formage (13), sur lequel le filament spiralé (16) peut être déposé au moyen de l'enrouleur (11) et en être retiré, **caractérisé en ce qu'**à l'enrouleur (11) est affecté un dispositif de déformation (27) qui tourne avec lui pour la section transversale du fil respectif (7).

2. Dispositif selon la revendication 1, **caractérisé en ce que** le dispositif de déformation (27) est monté en amont de l'enrouleur (11).

3. Dispositif selon la revendication 2, **caractérisé en ce que** le guide (15) pour les fils (7) se présente sous la forme d'un canal de guidage parallèle à l'axe dans l'enrouleur (11) et le dispositif de déformation (27) présente une sortie (28e), qui est disposée en amont de l'enrouleur (11) de manière que la sortie (28e) du dispositif de déformation soit alignée sur le guide (15) de l'enrouleur (11).

4. Dispositif selon la revendication 3, **caractérisé en ce que** le dispositif de déformation (27) est lié solidaire en rotation avec l'enrouleur (11).

5. Dispositif selon la revendication 1, **caractérisé en ce que** le dispositif de déformation (27) possède deux cylindres (29a, 29b) dont les axes (A1, A2) s'étendent tangentiellement à des surfaces cylindriques virtuelles qui entourent concentriquement l'axe de rotation (A) du dispositif de déformation (27).

6. Dispositif selon la revendication 5, **caractérisé en ce que** la distance des cylindres (29a, 29b) et donc l'écartement (29c) des cylindres sont réglables.

7. Dispositif selon la revendication 6, **caractérisé en ce que** l'écartement (29c) des cylindres est ménagé de manière excentrique par rapport à l'axe de rotation (A) du dispositif de déformation (27).

8. Dispositif selon la revendication 6, **caractérisé en ce que** le cylindre réglable (29a) est aménagé dans un support de coussinet (31), qui peut être réglé via une broche filetée (32) dont l'extrémité de commande possède un bouton de réglage (33) qui se trouve dans la surface périphérique à symétrie de rotation du boîtier (28) du dispositif de déformation (27).

9. Dispositif selon la revendication 8, **caractérisé en ce qu'**une échelle pour l'écartement (29c) des cylindres est disposée entre le bouton de réglage (33) et le boîtier (28).

10. Dispositif selon la revendication 5, **caractérisé en ce que** les cylindres (29a, 29b) se présentent sous la forme de roulements à billes.

11. Dispositif selon la revendication 5, **caractérisé en ce que** les surfaces externes des cylindres (29a, 29b) sont profilées.

12. Dispositif selon la revendication 5, **caractérisé en ce que** les cylindres (29a, 29b) peuvent être entraînés par la force de traction du fil (7).

13. Dispositif selon la revendication 5, **caractérisé en ce qu'**au moins l'un des cylindres (29a, 29b) est pourvu d'un entraînement.

14. Dispositif selon la revendication 1, **caractérisé en ce que** l'enrouleur (11) et le dispositif de déformation (27) sont montés respectivement à rotation sur des tourillons (34, 35), dont les axes de rotation sont orientés radialement décalés l'un de l'autre pour bloquer une rotation propre et
a) le tourillon (34) de l'enrouleur (11) est relié solidaire en rotation avec l'âme (12) et le corps de formage (13) pour la formation des filaments spiralés (16) sur le corps de formage (13), et
b) le corps creux (14) est monté à rotation sur ce tourillon avec le guide (15) pour le fil (7).

15. Dispositif selon la revendication 14, **caractérisé en ce que** l'on aménage sur le corps creux (14) concentriquement une roue dentée (44) qui peut être entraînée au moyen d'un motoréducteur (41) et d'une autre roue dentée (43).

16. Dispositif selon la revendication 15, **caractérisé en ce que** le corps creux (14) est monté dans des roulements (38) avec la roue dentée (44).

17. Dispositif selon la revendication 14, **caractérisé en ce que** le corps creux (36) du dispositif de déformation (27) est relié au corps creux (14) de l'enrouleur (11) via des moyens de couplage (45/46) mobiles radialement l'un par rapport à l'autre, qui garantissent une rotation des corps creux (14, 36) montés décalés radialement l'un de l'autre sur les tourillons (34, 35).

18. Dispositif selon la revendication 17, **caractérisé en ce que** le corps creux (36) du dispositif de déformation (27) est monté avec celui-ci dans des roulements (29).
